# EUROPÄISCHE PATENTSCHRIFT

(11) **EP 2 237 977 B1**
(45) Veröffentlichungstag und Bekanntmachung des Hinweises auf die Patenterteilung: **17.07.2019**
(21) Anmeldenummer: 08871872.1
(22) Anmeldetag: 17.11.2008
(51) Int. Cl.: B60C 11/24

(54) **VERFAHREN ZUR BESTIMMUNG EINER FAHRZEUGREIFENPROFILTIEFE**
METHOD FOR DETERMINING THE PROFILE DEPTH OF A VEHICLE TYRE
PROCÉDÉ POUR DÉTERMINER LA PROFONDEUR DE SCULPTURE D'UN PNEU DE VÉHICULE

(30) Priorität: 29.01.2008 DE 102008006566
(43) Veröffentlichungstag der Anmeldung: 13.10.2010
(73) Patentinhaber: Robert Bosch GmbH, 70442 Stuttgart (DE)
(72) Erfinder: PANNEK, Thorsten, 70176 Stuttgart (DE)
(86) Internationale Anmeldenummer: PCT/EP2008/065680
(87) Internationale Veröffentlichungsnummer: WO 2009/095113

(56) Entgegenhaltungen:
- EP-A- 1 759 891
- EP-A1- 2 172 759
- EP-A1- 2 181 001
- DE-A1-102006 028 411
- US-A- 5 749 984

## Beschreibung

### Stand der Technik

Die Erfindung geht aus von einem Verfahren nach dem Oberbegriff des Anspruchs 1.

Solche Einrichtungen sind allgemein bekannt. Beispielsweise ist aus der Druckschrift DE 103 04 126 A1 eine elektronische Einrichtung zur Messung einer Reifenprofiltiefe und eines Druckverlusts eines Fahrzeugreifens bekannt, wobei ein Referenzwert eines zurückgelegten Weges mit den Radumdrehungen einer ABS-Radtachosensorik verglichen werden und wobei aufgrund von Korrelationsalgorithmen auf den tatsächlichen Reifendurchmesser und die Profiltiefe geschlossen wird. Nachteilig ist, dass dieses Verfahren bzw. diese Einrichtung zu ungenau ist, um eine vergleichsweise präzise und sichere Bestimmung der Fahrzeugreifenprofiltiefe zu ermöglichen.

Aus der Schrift DE 10 2006 028 411 A1 ist ein Verfahren zur Reifenzustandserkennung bekannt, bei dem ein im Reifeninneren angeordneter Sensor während des Kontakts mit der Fahrbahn Signale erzeugt, die teilweise für die Fahrbahnoberfläche und für den Reifen bzw. deren Eigenschaften charakteristisch sind. Die so erhaltenen Signale erzeugen ein Spektrum, welches aus dem Reifenprofil resultiert. Die so erhaltenen Signale können daher dazu genutzt werden, den Reifenzustand und/oder die Eigenschaft der Fahrbahn zu ermitteln.

Aus der Schrift EP 1 759 891 A1 ist ein System bekannt, bei dem ein Sensor im Reifen die Beschleunigung eines zugeordneten vertieft angeordneten Abnutzungselements erfasst. Ist der Reifens ausreichend abgenutzt, erkennt der Sensor eine Veränderung im Verhalten des Abnutzungselements während eines Umlaufs des Reifens.

Aus der Schrift US 5 749 984 A ist ein System zur Erfassung der Verformung der Seitenwand eines luftgefüllten Reifens bekannt. Hierzu wird ein Sensor innerhalb des Reifens verwendet, der den Aufstand des Reifens auf der Fahrbahn erfasst. Aus diesen Sensordaten wird im Laufe des Verfahrens auf die Kontaktlänge CL geschlossen, während der der Reifen die Fahrbahn kontaktiert bzw. der Reifen eine Verformung der Seitenwand aufweist.

Aus der Schrift EP 2 172 759 A1 ist ein Verfahren bekannt, bei dem mittels der Erfassung der Verformung des Reifens während des Kontakts mit der Fahrbahn auf den Verschleiß geschlossen werden kann.

Aus der Schrift EP 2 181 001 B1 ist ein Verfahren bekannt, bei dem mittels eines Sensors am Fahrzeugreifen die Profiltiefe das Fahrradreifens mittels des Reifenumlaufs und/oder der Reifenaufstandsdauer bestimmt werden kann.

### Offenbarung der Erfindung

Das erfindungsgemäße Verfahren zur Bestimmung einer Fahrzeugreifenprofiltiefe gemäß den nebengeordneten Ansprüchen, hat gegenüber dem Stand der Technik den Vorteil, dass eine unmittelbare Bestimmung des Reifenumfangs in besonders einfacher Weise mit nur einem einzigen Sensor ermöglicht wird. Dies wird dadurch erreicht, dass der Sensor sowohl die Reifenumlaufdauer des Fahrzeugreifens, als auch die Reifenaufstandsdauer misst. Die Reifenumlaufdauer ist proportional zum Reifenumfang, während die Reifenaufstandsdauer auch bei einer Änderung des Reifenumfangs im Wesentlichen konstant ist und/oder die Änderung der Reifenaufstandsdauer geringer als die Änderung der Reifenumlaufdauer ist, da die Reifenaufstandsdauer in erster Näherung vor allem vom Fahrzeuggewicht abhängt. Erfindungsgemäß ist die Änderung des Verhältnisses von der Reifenaufstandsdauer zur Reifenumlaufdauer somit ein Maß für den sich ändernden Reifenumfang. Der Sensor ist vorzugsweise in einem Reifenabschnitt angeordnet, welcher bezüglich der Reifenachse einen Radius ungleich null aufweist, so dass ein Sensorreifenabschnitt einen Abschnitt einer Reifenlauffläche bezeichnet, welcher eine Überlappung mit dem Sensor in radialer Richtung des Fahrzeugreifens aufweist. Die Reifenaufstandsfläche umfasst im Sinne der Erfindung eine Fläche eines Kontaktbereiches von dem Fahrzeugreifen mit einer Fahrbahn. Die Messung der Reifenaufstandsdauer und der Reifenumlaufdauer erfolgt beispielsweise durch eine Messung einer Kraftwirkung auf den Sensor, wobei sich in einem ersten Zeitintervall der Sensorreifenabschnitt in der Reifenaufstandsfläche befindet, so dass im Wesentlichen die Gravitationskraft auf den Sensor wirkt und wobei sich in einem zweiten Zeitintervall der Sensorreifenabschnitt außerhalb der Reifenaufstandsfläche befindet, so dass im Wesentlichen eine Zentrifugalkraft hervorgerufen durch die Rotation des Fahrzeugreifens auf den Sensor wirkt. Das erste Zeitintervall umfasst somit die Reifenaufstandsdauer und eine Summe aus dem ersten und dem zweiten Zeitintervall die Reifenumlaufdauer. Die Bestimmung des ersten, des zweiten und/oder der Summe aus dem ersten und dem zweiten Zeitintervall erfolgt durch eine Messung von Zeitwerten zu Zeitpunkten, in welchen die Kraftwirkung auf den Sensor eine vergleichsweise große Änderung aufweist, d.h. in einem Übergangsbereich von der Gravitationskraft zur Zentrifugalkraft oder umgekehrt. In besonders vorteilhafter Weise ermöglicht die Messung der Reifenaufstandsfläche zusätzlich die Bestimmung des Ladezustands des Fahrzeugs.

Gemäß einer weiteren bevorzugten Weiterbildung wird zur Bestimmung der mittleren Fahrzeugreifenprofiltiefe ein Mittelwert über viele Einzelbestimmungen der Fahrzeugreifenprofiltiefen gebildet wird, so dass in besonders vorteilhafter Weise die Genauigkeit der Reifenprofiltiefenbestimmung erhöht wird. Insbesondere ist eine Mittelwertbildung über viele Einzelbestimmungen vorgesehen, welche durch unterschiedliche Messverfahren ermittelt werden.

Gemäß einer weiteren bevorzugten Weiterbildung wird die Bestimmung der Fahrzeugreifenprofiltiefe in Abhängigkeit von ersten Korrekturdaten eines Speichers durchgeführt wird, wobei der Speicher Kennlinien den Fahrzeugreifen aufweist und wobei die Kennlinien bevorzugt Informationen bezüglich der Dimensionen, Rolleigenschaften, Rollradiusänderungen und werksseitigen Reifenprofiltiefen verschiedener Reifentypen umfassen. Besonders vorteilhaft wird mittels dieser Informationen über den Fahrzeugreifen eine Korrektur der Reifenprofiltiefe zur Erhöhung der Genauigkeit derselben ermöglicht. Insbesondere ist aufgrund der Dimensionsangaben eines Neureifens die Bestimmung bzw. Detektion einer absoluten Reifenprofiltiefe realisierbar, beispielsweise einer minimalen Profiltiefe von 1,6 mm. Weiterhin wird ein sich verändernder Rollradius des Fahrzeugreifens berücksichtigt.

Gemäß einer weiteren bevorzugten Weiterbildung wird die Bestimmung der Fahrzeugreifenprofiltiefe in Abhängigkeit von zweiten Korrekturdaten eines Reifendrucksensors durchgeführt wird. Die Reifenaufstandsfläche bzw. -dauer weist neben der Abhängigkeit vom Fahrzeuggewicht eine vergleichsweise geringe Abhängigkeit vom Reifendruck auf, so dass eine Berücksichtigung des Reifendrucks mittels eines Reifendrucksensors vorteilhaft die Genauigkeit der Fahrzeugreifenprofiltiefenbestimmung erhöht.

Gemäß einer weiteren bevorzugten Weiterbildung wird die Bestimmung der Fahrzeugreifenprofiltiefe in Abhängigkeit von dritten Korrekturdaten durchgeführt, wobei die dritten Korrekturdaten Unterschiede zwischen den Reifenumlaufdauern einer Mehrzahl von Fahrzeugreifen des Fahrzeugs umfassen, welche insbesondere beim Lenkvorgang auftreten. Vorteilhaft wird somit eine weitere Korrektur der Reifenprofiltiefe realisiert, da insbesondere in Kurvenfahrten die Reifenumlaufdauer der Fahrzeugreifen unabhängig von einer Reifenumfangsänderung variieren kann.

Gemäß einer weiteren bevorzugten Weiterbildung wird die Bestimmung der Fahrzeugreifenprofiltiefe in Abhängigkeit von vierten Korrekturdaten eines Traktionskontrollsystems, von Neigungssensoren und/oder von Wegesensoren durchgeführt wird, so dass in vorteilhafter Weise eine zusätzliche Korrektur der Reifenprofiltiefe zur Erhöhung der Genauigkeit derselben realisierbar ist. Insbesondere ermöglichen die Korrekturdaten der Neigungssensoren eine Detektion des Ladezustands des Fahrzeugs, welcher einen vergleichsweise großen Einfluss auf die Größe der Reifenaufstandsfläche und somit auf die Profiltiefenbestimmung aufweist.

Gemäß einer weiteren bevorzugten Weiterbildung wird die Fahrzeugreifenprofiltiefe einem Fahrzeugführer mitgeteilt, wird bei einem Unterschreiten eines Grenzwertes durch die Fahrzeugreifenprofiltiefe ein Warnsignal erzeugt und/oder wird eine maximale Reichweite des Fahrzeugs bis zum Unterschreiten des Grenzwertes durch die Fahrzeugreifenprofiltiefe bestimmt und/oder dem Fahrzeugführer mitgeteilt. Besonders vorteilhaft wird somit der Fahrzeugführer ständig über die aktuelle Reifenprofiltiefe seines Fahrzeugs, insbesondere visuell und/oder akustisch, informiert, so dass das Unfall- und Pannenrisiko aufgrund von Reifenschäden und/oder mangelnder Reifenprofiltiefe erheblich reduziert wird. Weiterhin ist aufgrund der Berechnung der verbleibenden maximalen Reichweite ist für den Fahrzeugführer eine frühzeitige Planung eines bevorstehenden Reifenwechsels, insbesondere vor längeren Fahrten, möglich.

Gemäß einer weiteren bevorzugten Weiterbildung erfolgt die Bestimmung der Fahrzeugreifenprofiltiefe in einer zentralen Steuereinheit, welche bevorzugt die Reifenumlaufdauer, den Geschwindigkeitswert, die Reifenaufstandsfläche, den Mittelwert, die Fahrzeugreifenprofiltiefe, die Reichweite, den Grenzwert, das Warnsignal, die ersten Korrekturdaten, die zweiten Korrekturdaten und/oder die dritten Korrekturdaten induktiv und/oder elektromagnetisch empfängt. Besonders vorteilhaft ist somit eine Anordnung der zentralen Steuereinheit an einem Ort im Fahrzeug möglich, welcher vergleichsweise leicht zu erreichen und/oder kostengünstig zu kontaktieren ist, insbesondere mit Versorgungsleitungen. Eine derartige drahtlose Übertragung der Daten ermöglicht ferner eine Anordnung der Sensoren beabstandet zur Steuereinheit, so dass insbesondere die Anordnung eines Beschleunigungssensors im Fahrzeugreifen realisierbar ist.

Ein weiterer Gegenstand der vorliegenden Erfindung ist eine Sensoranordnung zur Bestimmung einer Fahrzeugreifenprofiltiefe, insbesondere zur Durchführung eines Verfahrens nach einem der vorherigen Ansprüche, wobei der Sensor im oder an einem Fahrzeugreifen angeordnet ist und die Reifenaufstandsdauer des Fahrzeugreifens detektiert und wobei der Sensor bevorzugt einen Beschleunigungssensor umfasst. Ein Beschleunigungssensor angebracht im Sensorreifenabschnitt des Fahrzeugreifens ermöglicht, wie oben beschrieben, die Detektion der Reifenaufstandsdauer und/oder der Reifenumlaufsdauer durch die Zeitmessung beim Auftreten vergleichsweise großer Kraftwirkungsänderungen auf den Sensor. Vorteilhaft wird somit eine im Vergleich zum Stand der Technik deutlich erhöhte Präzision einer Fahrzeugreifenprofiltiefenbestimmung mit lediglich einem einzigen Sensor realisiert.

### Kurze Beschreibung der Zeichnung

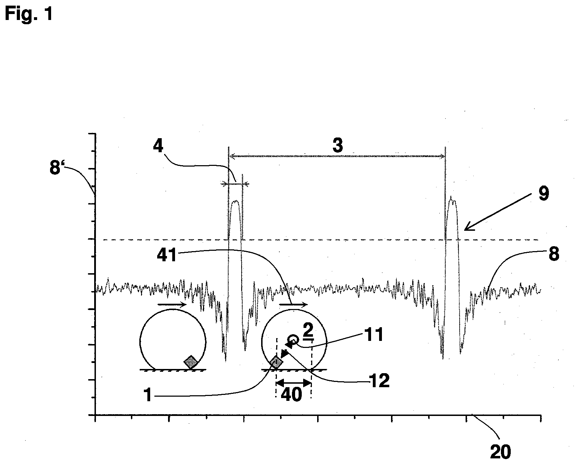

**Figur 1** zeigt eine schematische graphische Darstellung einer Kraftwirkung auf einen Beschleunigungssensor in einem Verfahren gemäß einer beispielhaften Ausführungsform der vorliegenden Erfindung.

### Ausführungsform(en) der Erfindung

In **Figur 1** ist eine schematische graphische Darstellung einer Kraftwirkung auf einen Beschleunigungssensor in einem Verfahren gemäß einer beispielhaften Ausführungsform der vorliegenden Erfindung dargestellt, wobei ein Beschleunigungssensor 1 in einem Bereich eines Fahrzeugreifens 2 angeordnet ist, welcher gegenüber einer Reifenachse 11 einen Radius 12 größer null aufweist, so dass sich der Sensor 1 insbesondere im Bereich einer Reifenlauffläche 17 befindet. Eine Reifenaufstandsfläche 40 wird durch einen Kontaktbereich zwischen der Reifenlauffläche 17 und einer Fahrbahn 18 gebildet. Ein Sensorreifenabschnitt umfasst einen Abschnitt der Reifenlauffläche 17, welcher im Wesentlichen in einer radialen Richtung, parallel zum Radius 12, den Sensor 1 überlappt. Befindet sich der Sensorreifenabschnitt aufgrund einer Reifenrotation 41 um die Reifenachse 11 in der Reifenaufstandsfläche 40, so wirkt im Wesentlichen die Erdanziehungskraft (1g) auf den Sensor 1, während auf den Sensor 1 im Wesentlichen eine Zentrifugalkraft 37 hervorgerufen durch die Reifenrotation 41 wirkt, sobald sich der Sensorreifenabschnitt außerhalb der Reifenaufstandsfläche 40 befindet. Die graphische Darstellung zeigt einen Verlauf der Kraftwirkung 8 auf den Sensor 1 gegen eine Zeiteinheit, wobei auf einer Ordinate 8' eine Kraftwirkungsskala und auf einer Abszisse 20 eine Zeitskala aufgetragen ist. Der Verlauf der Kraftwirkung 8 umfasst jeweils bei einem Übergang des Sensorreifenabschnitts in die Reifenaufstandsfläche 40 bzw. bei einem Übergangs des Sensorreifenabschnitts aus der Reifenaufstandsfläche 40 heraus eine vergleichsweise große Änderung 9 in seinem Verlauf, wobei eine Differenz der Zeitpunkte zwischen einem Eintreten 20' und einem Austreten 20" des Sensorreifenabschnitts in bzw. aus der Reifenaufstandsfläche 40 das erste Zeitintervall bzw. die Reifenaufstandsdauer 4 darstellt und wobei eine Differenz der Zeitpunkte zwischen dem Eintreten 20' und einem weiteren darauffolgenden Eintreten 20"'des Sensorreifenabschnitts in die Reifenaufstandsfläche 40 die Summe des ersten und eines zweiten Zeitintervalls bzw. die Reifenumlaufsdauer 3 darstellen. Die großen Kraftwirkungsänderungen 9 werden insbesondere durch ein mathematisches Ableiten des Kraftwirkungsverlaufs 8 in vergleichsweise einfacher Weise detektierbar. Die Reifenumlaufdauer 3 ist proportional zum Reifenumfang, während die Reifaufstandsdauer 4 auch bei einer Änderung des Reifenumfangs im Wesentlichen konstant ist. Die Änderung des Verhältnisses von der Reifenaufstandsdauer 4 zur Reifenumlaufsdauer 3 ist somit ein Maß für den sich ändernden Reifenumfang und daher für die Reifenprofiltiefe. Eine Umrechnung der Reifenprofiltiefe in einen absoluten Reifenprofiltiefenwert ist unter Zuhilfenahme von Dimensionsinformationen des fabrikneuen Fahrzeugreifens, d.h. des Reifenumfangs mit maximaler Reifenprofiltiefe, möglich. Unter Verwendung von Korrekturdaten, welche beispielsweise die Beladung des Fahrzeugs detektieren und/oder den Reifendruck berücksichtigen, ist vorzugsweise eine Korrektur der bestimmten Reifenprofiltiefe zur Erhöhung der Genauigkeit vorgesehen.

## Patentansprüche

1. Verfahren zur Bestimmung einer Fahrzeugreifenprofiltiefe (50) mit wenigstens einem im oder am Fahrzeugreifen (2) angeordneten Sensor (1), **dadurch gekennzeichnet, dass** die Reifenprofiltiefe (50) in Abhängigkeit der Änderung des Verhältnisses von einer vom Sensor (1) detektierten Reifenaufstandsdauer (4) zu einer Reifenumlaufdauer (3) bestimmt wird.

2. Verfahren nach Anspruch 1, **dadurch gekennzeichnet, dass** in Abhängigkeit der Reifenaufstandsdauer die Reifenumlaufdauer (3) bestimmt wird.

3. Verfahren nach Anspruch 1, **dadurch gekennzeichnet, dass** der Sensor (1) die Reifenumlaufdauer (3) misst.

4. Verfahren nach einem der vorherigen Ansprüche, **dadurch gekennzeichnet, dass** zur Bestimmung der mittleren Fahrzeugreifenprofiltiefe ein Mittelwert über viele Einzelbestimmungen der Fahrzeugreifenprofiltiefen (50) gebildet wird.

5. Verfahren nach einem der vorherigen Ansprüche, **dadurch gekennzeichnet, dass** die Bestimmung der Fahrzeugreifenprofiltiefe (50) in Abhängigkeit von ersten Korrekturdaten eines Speichers durchgeführt wird, wobei der Speicher Kennlinien über Fahrzeugreifen (2) aufweist und wobei die Kennlinien bevorzugt Informationen bezüglich der Dimensionen, Rolleigenschaften, Rollradiusänderungen und werksseitigen Reifenprofiltiefen verschiedener Reifentypen umfassen.

6. Verfahren nach einem der vorherigen Ansprüche, **dadurch gekennzeichnet, dass** die Bestimmung der Fahrzeugreifenprofiltiefe (50) in Abhängigkeit von zweiten Korrekturdaten eines Reifendrucksensors durchgeführt wird.

7. Verfahren nach einem der vorherigen Ansprüche, **dadurch gekennzeichnet, dass** die Bestimmung der Fahrzeugreifenprofiltiefe (50) in Abhängigkeit von dritten Korrekturdaten durchgeführt wird, wobei die dritten Korrekturdaten Unterschiede zwischen den Reifenumlaufdauern (3) einer Mehrzahl von Fahrzeugreifen (2) des Fahrzeugs umfassen, welche insbesondere beim Lenkvorgang auftreten.

8. Verfahren nach einem der vorherigen Ansprüche, **dadurch gekennzeichnet, dass** die Bestimmung der Fahrzeugreifenprofiltiefe (50) in Abhängigkeit von vierten Korrekturdaten eines Traktionskontrollsystems, von Neigungssensoren und/oder von Wegesensoren durchgeführt wird.

9. Verfahren nach einem der vorherigen Ansprüche, **dadurch gekennzeichnet, dass** die Fahrzeugreifenprofiltiefe (50) einem Fahrzeugführer mitgeteilt wird, dass bei einem Unterschreiten eines Grenzwertes durch die Fahrzeugreifenprofiltiefe (50) ein Warnsignal erzeugt wird und/oder dass eine maximale Reichweite des Fahrzeugs bis zum Unterschreiten des Grenzwertes durch die Fahrzeugreifenprofiltiefe (50) bestimmt und/oder dem Fahrzeugführer mitgeteilt wird.

10. Verfahren nach einem der vorherigen Ansprüche, **dadurch gekennzeichnet, dass** die Bestimmung der Fahrzeugreifenprofiltiefe (50) in einer zentralen Steuereinheit erfolgt, welche bevorzugt die Reifenumlaufdauer (3), den Geschwindigkeitswert, die Reifenaufstandsdauer (4), den Mittelwert, die Fahrzeugreifenprofiltiefe (50), die Reichweite, den Grenzwert, das Warnsignal, die ersten Korrekturdaten, die zweiten Korrekturdaten und/oder die dritten Korrekturdaten induktiv und/oder elektromagnetisch empfängt.

11. Sensoranordnung zur Durchführung eines Verfahrens zur Bestimmung einer Fahrzeugreifenprofiltiefe (50) nach einem der vorherigen Ansprüche, mit einem Sensor (1), der im oder an einem Fahrzeugreifen (2) angeordnet ist und die Reifenaufstandsdauer des Fahrzeugreifens (2) detektiert **dadurch gekennzeichnet, dass**
die Sensoranordnung die Fahrzeugreifenprofiltiefe (50) in Abhängigkeit der Änderung des Verhältnisses von der detektierten Reifenaufstandsdauer (4) zu einer Reifenumlaufdauer (3) bestimmt.

12. Sensoranordnung nach Anspruch 11, **dadurch gekennzeichnet, dass** der Sensor (1) einen Beschleunigungssensor umfasst.

## Claims

1. Method for determining a tyre profile depth (50) of a vehicle, having at least one sensor (1) which is arranged in or on the vehicle tyre (2), **characterized in that** the tyre profile depth (50) is determined as a function of the change in the ratio of a tyre contact duration (4) detected by the sensor (1) to a tyre revolution duration (3).

2. Method according to Claim 1, **characterized in that** the tyre revolution duration (3) is determined as a function of the tyre contact duration.

3. Method according to Claim 1, **characterized in that** the sensor (1) measures the tyre revolution duration (3).

4. Method according to one of the preceding claims, **characterized in that** in order to determine the mean vehicle tyre profile depth a mean value is formed over a plurality of individual determinations of the vehicle tyre profile depths (50) .

5. Method according to one of the preceding claims, **characterized in that** the determination of the vehicle tyre profile depth (50) is carried out as a function of first correction data of a memory, wherein the memory has characteristic curves relating to vehicle tyres (2), and wherein the characteristic curves preferably comprise information relating to the dimensions, rolling properties, changes in the rolling radius and factory-side tyre profile depths of various types of tyre.

6. Method according to one of the preceding claims, **characterized in that** the determination of the vehicle tyre profile depth (50) is carried out as a function of second correction data of a tyre pressure sensor.

7. Method according to one of the preceding claims, **characterized in that** the determination of the vehicle tyre profile depth (50) is carried out as a function of third correction data, wherein the third correction data comprise differences between the tyre revolution durations (3) of a multiplicity of vehicle tyres (2) of the vehicle, which differences occur, in particular, during the steering process.

8. Method according to one of the preceding claims, **characterized in that** the determination of the vehicle tyre profile depth (50) is carried out as a function of the fourth correction data of a traction control system, of inclination sensors and/or of travel sensors.

9. Method according to one of the preceding claims, **characterized in that** the vehicle tyre profile depth (50) is communicated to a vehicle driver, **in that** when a limiting value is undershot by the vehicle tyre profile depth (50) a warning signal is generated, and/or **in that** a maximum range of the vehicle up to the undershooting of the limiting value by the vehicle tyre profile depth (50) is determined and/or communicated to the vehicle driver.

10. Method according to one of the preceding claims, **characterized in that** the determination of the vehicle tyre profile depth (50) takes place in a central control unit which preferably receives the tyre revolution duration (3), the speed value, the tyre contact duration (4), the mean value, the vehicle tyre profile depth (50), the range, the limiting value, the warning signal, the first correction data, the second correction data and/or the third correction data inductively and/or electromagnetically.

11. Sensor arrangement for carrying out a method for determining a vehicle tyre profile depth (50) according to one of the preceding claims, having a sensor (1) which is arranged in or on a vehicle tyre (2) and which detects the tyre contact duration of the vehicle tyre (2),
**characterized in that**
the sensor arrangement determines the vehicle tyre profile depth (50) as a function of the change in the ratio of the detected tyre contact duration (4) to a tyre revolution duration (3).

12. Sensor arrangement according to Claim 11, **characterized in that** the sensor (1) comprises an acceleration sensor.

## Revendications

1. Procédé de détermination d'une profondeur de sculpture de pneu de véhicule (50), comprenant au moins un capteur (1) disposé dans ou sur le pneu de véhicule (2), **caractérisé en ce que** la profondeur de sculpture de pneu (50) est déterminée en fonction de la variation du rapport d'une durée d'appui au sol du pneu (4) détectée par le capteur (1) à une durée de tour d'un pneu (3) .

2. Procédé selon la revendication 1, **caractérisé en ce que** l'on détermine la durée d'un tour du pneu (3) en fonction de la durée d'appui au sol du pneu.

3. Procédé selon la revendication 1, **caractérisé en ce que** le capteur (1) mesure la durée d'un tour du pneu (3).

4. Procédé selon l'une quelconque des revendications précédentes, **caractérisé en ce que** pour déterminer la profondeur de sculpture moyenne d'un pneu de véhicule, une valeur moyenne est formée à partir de plusieurs déterminations individuelles des profondeurs de sculpture de pneu de véhicule (50).

5. Procédé selon l'une quelconque des revendications précédentes, **caractérisé en ce que** la détermination de la profondeur de sculpture de pneu de véhicule (50) est effectuée en fonction de premières données de correction d'une mémoire, la mémoire présentant des caractéristiques concernant le pneu de véhicule (2), et les caractéristiques comprenant de préférence des informations relatives aux dimensions, aux propriétés de roulement, aux variations du rayon de roulement et aux profondeurs de sculpture de pneu en usine pour différents types de pneus.

6. Procédé selon l'une quelconque des revendications précédentes, **caractérisé en ce que** la détermination de la profondeur de sculpture de pneu de véhicule (50) est effectuée en fonction de deuxièmes données de correction d'un capteur de pression de pneu.

7. Procédé selon l'une quelconque des revendications précédentes, **caractérisé en ce que** la détermination de la profondeur de sculpture de pneu de véhicule (50) est effectuée en fonction de troisièmes données de correction, les troisièmes données de correction comprenant des différences entre les durées de tour du pneu (3) d'une pluralité de pneus de véhicule (2) du véhicule, lesquelles se produisent notamment lors de l'opération de braquage.

8. Procédé selon l'une quelconque des revendications précédentes, **caractérisé en ce que** la détermination de la profondeur de sculpture de pneu de véhicule (50) est effectuée en fonction de quatrièmes données de correction d'un système de contrôle de traction, par des capteurs d'inclinaison et/ou des capteurs de distance.

9. Procédé selon l'une quelconque des revendications précédentes, **caractérisé en ce que** la profondeur de sculpture de pneu de véhicule (50) est communiquée à un conducteur du véhicule, **en ce que** dans le cas du passage de la profondeur de sculpture de pneu de véhicule (50) en dessous d'une valeur limite, un signal d'avertissement est produit et/ou **en ce qu'**une distance à parcourir maximale du véhicule jusqu'au passage de la profondeur de sculpture de pneu de véhicule (50) en dessous de la valeur limite est déterminée et/ou est communiquée au conducteur du véhicule.

10. Procédé selon l'une quelconque des revendications précédentes, **caractérisé en ce que** la détermination de la profondeur de sculpture de pneu de véhicule (50) s'effectue dans une unité de commande centrale, qui reçoit par induction et/ou de manière électromagnétique, de préférence la durée de tour du pneu (3), la valeur de vitesse, la durée d'appui au sol du pneu (4), la valeur moyenne, la profondeur de sculpture de pneu de véhicule (50), la distance à parcourir, la valeur limite, le signal d'avertissement, les premières données de correction, les deuxièmes données de correction et/ou les troisièmes données de correction.

11. Agencement de capteur pour mettre en oeuvre un procédé de détermination d'une profondeur de sculpture de pneu de véhicule (50) selon l'une quelconque des revendications précédentes, comprenant un capteur (1) qui est disposé dans ou sur un pneu de véhicule (2) et qui détecte la durée d'appui au sol du pneu de véhicule (2), **caractérisé en ce que** l'agencement de capteur détermine la profondeur de sculpture de pneu de véhicule (50) en fonction de la variation du rapport de la durée d'appui au sol du pneu (4) détectée à une durée de tour d'un pneu (3).

12. Agencement de capteur selon la revendication 11, **caractérisé en ce que** le capteur (1) comprend un capteur d'accélération.
